# EUROPEAN PATENT APPLICATION

(11) **EP 1 982 882 A2**
(43) Date of publication of application: **22.10.2008**
(21) Application number: 08154806.7
(22) Date of filing: 18.04.2008
(51) Int. Cl.: B60T 7/08, B60T 17/22

(54) **Anti-freezing mechanism for a limit switch**

(30) Priority: 19.04.2007 JP 2007110730
(71) Applicant: KABUSHIKI KAISHA TOYOTA JIDOSHOKKI, Kariya-shi, Aichi 448-8671 (JP)
(72) Inventor: Yamamoto, Kenji, Kariya-shi Aichi 448-8671 (JP)
(74) Representative: TBK-Patent

(57) **Abstract**

An anti-freezing mechanism for a limit switch in an industrial vehicle includes a parking brake device, a parking brake lever, a parking lever and a limit switch. The parking brake device is used for parking the industrial vehicle. The parking brake fever is operated by an operator. The parking lever is used for connecting the parking brake lever with the parking brake device. The parking lever includes a link mechanism for actuating the parking brake device in accordance with the operation of the parking brake lever. The limit switch is used for detecting operating state of a parking brake. The limit switch is provided on the top surface of the parking lever. A water drain passage is formed in the parking lever at a position corresponding to a sliding portion of the limit switch for draining water attached to the sliding portion below the parking lever

## Description

### BACKGROUND OF THE INVENTION

The present invention relates to an anti-freezing mechanism for a limit switch which is provided for detecting the operating state of a parking brake in an industrial vehicle such as a forklift truck.

The forklift truck is widely used as an industrial vehicle for various loading operations such as lifting, stacking, etc. The forklift truck may be used in a cold storage warehouse depending on the usage. If the forklift truck enters into the cold storage warehouse with water attached to various parts thereof and then is operated there, the water on the forklift truck may freeze, If water is attached to any sliding portion of a limit switch provided in the forklift truck and freezes, the limit switch may fail to operate reliably.

In Japanese Unexamined Patent Application Publication No. 5-189073, a structure is proposed for preventing water from flowing into specific places. This Publication discloses a mechanism for preventing water from flowing into a limit switch mounted adjacent to loading levers.

Meanwhile, some forklift trucks are equipped with a detection mechanism for detecting whether the parking break is released or not. The detection mechanism has a limit switch for detecting the state of the parking brake whether the parking brake is released or not. The detection mechanism generates a warning to the operator if the operator attempts to drive the vehicle without releasing the parking brake. The detection mechanism determines that the parking brake is released when a built-in switch in the limit switch is in the ON-state. The detection mechanism determines that the parking brake is not released when the built-in switch in the limit switch is in the OFF-state.

If the water attached to the sliding portion of the limit switch freezes, the limit switch may fail to work and the operating state of the parking brake is not detected reliably. If water attached to the limit switch freezes with the parking brake released, the limit switch sends a signal indicating the released state of the parking brake when the operator manipulates the parking brake lever for applying of the parking brake. Due to the freeze of the water, the limit switch sends a signal indicating the released state of the parking brake even if the operator drives the forklift truck without releasing the parking brake, and therefore, the detection mechanism does not work reliably.

The present invention, which has been made in view of the above-described problems, is directed to an anti-freezing mechanism for a limit switch for preventing the sliding portion of the limit switch from freezing.

### SUMMARY OF THE INVENTION

In accordance with an aspect of the present invention, an anti-freezing mechanism for a limit switch in an industrial vehicle includes a parking brake device, a parking brake lever, a parking lever and a limit switch. The parking brake device is used for parking the industrial vehicle. The parking brake lever is operated by an operator. The parking lever is used for connecting the parking brake lever with the parking brake device. The parking lever includes a link mechanism for actuating the parking brake device in accordance with the operation of the parking brake lever. The limit switch is provided on the top surface of the parking lever. The limit switch is used for detecting operating state of a parking brake. A water drain passage is formed in the parking lever at a position corresponding to a sliding portion of the limit switch for draining water attached to the sliding portion below the parking lever.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a side view of a forklift truck to which the present invention is to be applied;
Fig. 2 is a partial enlarged perspective view showing a parking brake device and the connection thereof with a parking brake lever in the forklift truck according to a first preferred embodiment of the present invention;
Fig.3 is a perspective view of a recess formed in a parking lever in the first preferred embodiment of the present invention;
Fig. 4 is a side view explaining a limit switch on the parking lever having a recess in the first preferred embodiment of the present invention;
Fig. 5 is a side view explaining a limit switch on the parking lever having a hole in an alternative embodiment of the present invention; and
Fig. 6 is a side view explaining a limit switch on the parking lever having a groove in another alternative embodiment of the present invention.

### DETAILED DESCRIPTION OF THE PREFERRED EMBODIMENTS

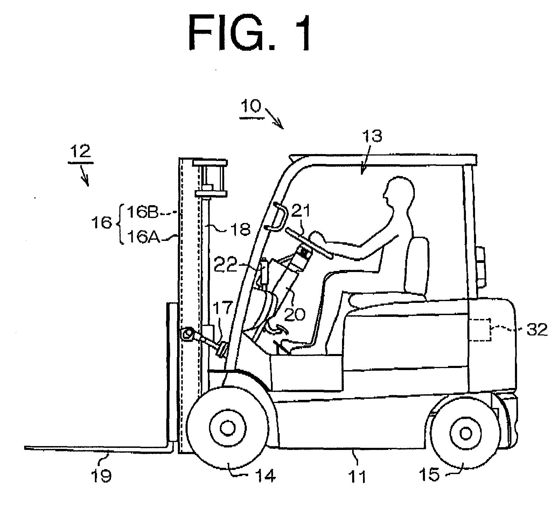

The following will describe a preferred embodiment of an anti-freezing mechanism in an industrial vehicle according to the present invention with reference to Fig. 1 through Fig. 4. As shown in Fig. 1, a forklift truck 10 has a truck body 11 and a loading equipment 12 at the front of the truck body 11. An operator's compartment 13 is provided in the center of the truck body 11. Driving wheels 14 (front wheels) are provided at the front lower portion of the truck body 11, and steered wheels 15 (rear wheels) are provided at the rear lower portion of the truck body 11. The driving wheels 14 are connected to a drive source such as an engine or a drive motor accommodated in the truck body 11 for supplying drive force to the driving wheels 14.

The loading equipment 12 includes masts 16 provided upright at the front of the truck body 11. The masts 16 include a pair of outer masts 16A and a pair of inner masts 16B. The outer mast 16A is connected to a hydraulic tilt cylinder 17 and the inner mast 16B is connected to a hydraulic lift cylinder 18. A pair of forks 19 is provided on the masts 16. Loading operation for picking or stacking loads is performed by lifting or lowering a pallet having thereon loads (not shown) by means of the forks 19. The forks 19 are raised and lowered by moving the inner masts 16B along and relative to the outer masts 16A by the lift cylinder 18. The forks 19 are tiltable frontward and rearward together with the masts 16 by the tilt cylinder 17.

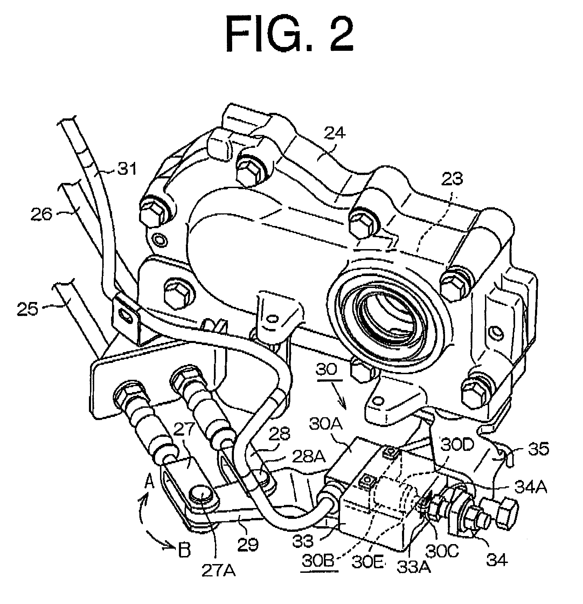

A steering column 20 is provided in the operator's compartment 13 and a steering wheel 21 for changing the steering angle of the steered wheels 15 is mounted to the steering column 20, In addition, a parking brake lever 22 is provided in the operator's compartment 13. The parking brake lever 22 is operated by the operator when the operator applies the parking brake for parking and releases the parking brake for starting the forklift truck 10. The truck body 11 has a service brake device and a parking brake device 23. The service brake device is used for stopping or controlling the traveling speed of the forklift truck 10. The parking brake device 23 is used for parking the forklift truck 10, as shown in Fig. 2. The parking brake device 23 is accommodated in a case 24 and arranged in the truck body 11.

As shown in Fig. 2, plural parking wires 25, 26 (two wires in the first preferred embodiment) are provided. One ends of the parking wires 25, 26 are connected to the parking brake lever 22. The other ends of the parking wires 25, 26 are connected to a plate-like parking lever 29 through connectors 27, 28. One end of the parking lever 29 is connected to connecting shafts 27A, 28A of the connectors 27, 28. The other end of the parking lever 29 is connected to the parking brake device 23.

According to this structure of the forklift truck 10, when the parking brake lever 22 is operated to apply the parking brake, the two parking wires 25, 26 are pulled thereby to move the parking lever 29 in the direction indicated by arrow A in Fig. 2. This actuates the parking brake device 23 and the parking brake is applied to the wheels 14, 15. Meanwhile, when the parking brake lever 22 is operated to release the parking brake, the two parking wires 25, 26 are pushed thereby to move the parking lever 29 in the direction indicated by arrow B in Fig, 2. This actuates the parking brake device 23 and the parking brake is released. Thus, the parking wires 25, 26 and the parking lever 29 constitute a link mechanism which actuates the parking brake device 23 in the first preferred embodiment.

A roller plunger type limit switch 30 is provided on the top surface of the parking lever 29. The limit switch 30 has a case 30A and a head 30B. The case 30A is used for enclosing therein a built-in switch (not shown) for switching an electric circuit. The head 30B is movable horizontally and linearly by an external force for transmitting such force to the built-in switch in the case 30A. A roller 30C connected to a plunger (not shown) is provided at the end of the head 30B. The head 30B is sealed by a boot seal 30D having a bellows 30E in such a manner that the roller 30C exposes and extends out of the boot seal 30D. Thus, the head 30B is proofed against dust and water. Therefore, the boot seal 30D serves as a seal.

A control device 32 (refer to Fig. 1) is provided in the truck body 11 of the forklift truck 10. The control device 32 performs various controls, such as traveling and load handling. A connector (not shown) is provided on a lateral surface of the case 30A of the limit switch 30. The connector is connected to a connecting cable 31 for sending an electric signal generated by the built-in switch to the control device 32. A box-shaped switch cover 33 is securely fastened to the outer surface of the case 30A. The limit switch 30 is fixed to the top surface of the parking lever 29 in such a manner that the head 30B is covered by the switch cover 33. The case 30A of the limit switch 30 is securely connected to the top surface of the parking lever 29. The switch cover 33 has an opening 33A formed through a lateral wall thereof. The roller 30C of the limit switch 30 extends out of the switch cover 33 through the opening 33A. The switch cover 33 protects the head 30B of the limit switch 30 against water falling directly to the head 30B.

The limit switch 30 has a bolt 34 which provides a contact surface. A bracket 35 is arranged to the bottom of the case 24 which accommodates the parking brake device 23. The bolt 34 is fastened to the bracket 35. A head 34A of the bolt 34 is located so as to correspond to the roller 30C of the limit switch 30 in the longitudinal direction of the bolt 34. When the parking brake lever 22 is pulled toward the operator, the parking lever 29 is moved in the direction indicated by the arrow A in Fig. 2. Thereby the roller 30C of the limit switch 30 is moved away from the head 34A of the bolt 34, On the other hand, when the parking brake lever 22 is released, the parking lever 29 is moved in the direction indicated by the arrow B in Fig. 2. Thereby the roller 30C of the limit switch 30 is moved toward and then into contact with the head 34A of the bolt 34.

When the parking brake lever 22 is released, the roller 30C is brought into contact with the head 34A of the bolt 34. Thereby contact force to the roller 30C is applied to move the roller 30C and the plunger into the head 30B of the limit switch 30. Thus, the built-in switch is turned ON-state. On the other hand, when the parking brake lever 22 is pulled toward the operator, the roller 30C is moved away from the head 34A of the bolt 34, so that the contact force is not released from the roller 30C. Thus, the roller 30C and the plunger are moved away from the head 30B, thereby the built-in switch is turned OFF-state. The limit switch 30 of the first preferred embodiment is constructed so as to be operated, as described above.

When the roller 30C is brought into contact with the head 34A of the bolt 34 thereby to move the roller 30C and plunger into the head 30B, the bellows 30E of the boot seal 30D contracts. On the other hand, when the roller 30C is moved away from the head 34A of the bolt 34 and the roller 30C is moved with the plunger away from the head 30B, the bellows 30E of the boot seal 30D extends. Thus, the contraction and extension of the bellows 30E of the boot seal 30D occur In conjunction with the horizontally linear movement of the roller 30C and plunger, Therefore, the bellows 30E of the boot seal 30D serves as a sliding portion of the limit switch 30 which slides in the horizontal direction on the top surface of the parking lever 29 during the operation of the limit switch 30.

The control device 32, which is connected to the limit switch 30 through the connecting cable 31, detects the operating state of the parking brake depending on whether the limit switch 30 is in ON-state or OFF-state. More specifically, when the limit switch 30 is in ON-state, and electrical ON-signal is transmitted to the control device 32, so that a released state of the parking brake is detected. The released state of the parking brake indicates the state in which the parking brake is not applied. Meanwhile, when the limit switch 30 is in OFF-state, an electrical OFF-signal is inputted into the control device 32, so that a non-release state of the parking brake is detected. The non-release state of the parking brake indicates the state in which the parking brake is applied. When the forklift truck 10 is started to travel in the non-release state of the parking brake (the state of OFF-signal being received by the control device 32), the control device 32 generates a warning that prompts the operator to release the parking brake. For example, the warning is given by activating a buzzer from a sound generating device (not shown) which is connected to the control device 32. Thus, the present embodiment of the invention provides a detection mechanism. According to the detection mechanism, the operating state of the parking brake is determined based on a detection signal from the limit switch 30, so that non-release state of the parking brake can be detected when he attempts to move the forklift truck without releasing the parking brake.

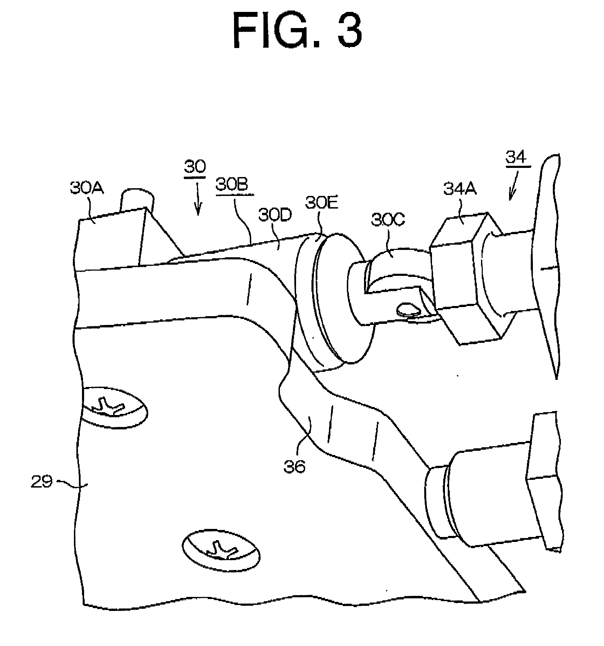

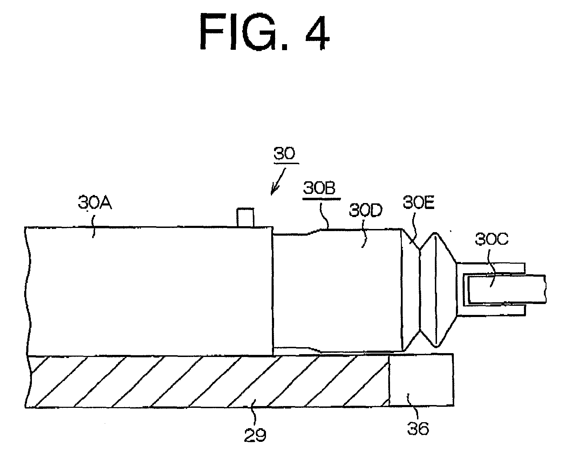

As shown in Fig. 3 and Fig. 4, the parking lever 29 has a cutout portion as a water drain passage at a position opposed to the bellows 30E (serving as a sliding portion) of the boot seal 30D which covers the head 30B of the limit switch 30. The cutout portion is a recess 36 formed in a part of the lateral surface of the parking lever 29. More specifically, the recess 36 is located at a position directly under the bellows 30E. The limit switch 30 is so arranged relative to the parking lever 29 that the roller 30C of the head 30B extends further than the lateral surface of the parking lever 29, and adjacent to the bolt 34. The recess 36 is formed in the lateral surface of the parking lever 29 over which the roller 30C of the head 30B is protrudingly located. The recess 36 is formed such that the width of the recess 36 is greater than the width of the bellows 30E. The widths of the recess 36 and the bellows 30E are measured perpendicularly to the longitudinal direction of the bellows 30E. The recess 36 is also formed such that a space under the bellows 30E is directly in communication with a space under the parking lever 29 through the recess 36. It is noted that the switch cover 33 is omitted in Fig. 3 and Fig. 4 for the sake of clarity illustration.

The following will describe the operation of the recess 36 formed in the parking lever 29. The parking lever 29 is arranged at a lower position of the truck body 11. Therefore, rain water or water used for washing the forklift truck 10 flows down into the switch cover 33 through clearances, and water may be attached on the outer circumferential surface of the boot seal 30D which covers the head 30B of the limit switch 30. Alternatively, in the situation that the forklift truck 10 travels in and out of a cold storage warehouse, water may be condensed and attached on the outer circumferential surface of the boot seal 30D due to the temperature difference between the inside and outside of the cold storage warehouse. According to the anti-freezing mechanism of the forklift truck 10 of the first preferred embodiment, the recess 36 is formed as a water drain passage in the lateral surface of the parking lever 29. Thus, water attached to the bellows 30E of the boot seal 30D serving as the sliding portion is discharged flowing through the recess 36 and dropped below the parking lever 29 and below the truck body 11. As is apparent from the foregoing, water attached to the bellows 30E does not remain between the boot seal 30D (or bellows 30E) and the top surface of the parking lever 29. Therefore, water attached to the bellows 30E in a cold storage warehouse is prevented from freezing because the water flows down through the recess 36, so that malfunction of the limit switch 30 is forestalled.

According to the first preferred embodiment, the following advantageous effects may be obtained.
(1) The recess 36 is formed as a water drain passage in the lateral surface of the parking lever 29 at a position opposed to the bellows 30E of the boot seal 30D as a sliding portion of the limit switch 30. Thus, water attached to the bellows 30E is allowed to flow through the recess 36 and dropped from the truck body 11. Therefore, even when the forklift truck 10 is operated in the cold storage warehouse, water is prevented from remaining on the bellows 30E so that freezing of water does not arise. As a result, malfunction of the limit switch 30 is forestalled, and the limit switch 30 keeps correctly performing the function of detecting the operating state of the parking brake (whether the parking brake is released or not). The detection mechanism for detecting the non-release state of the parking brake may be operated reliably.
(2) The water drain passage is provided merely by forming the recess 36 in the parking lever 29. Thus, an anti-freezing mechanism may be accomplished by a simple structure.
(3) As the water drain passage is provided by the recess 36, there is no need to modify outer configuration and arrangements related to various parts or members of the parking brake, such as the parking brake device 23 and the parking lever 29. Accordingly, the anti-freezing mechanism for the limit switch 30 may be accomplished only by modifying the shape of the parking lever 29, Therefore, when the anti-freezing mechanism of the present invention is to be employed in a forklift truck, there is no need to make a substantial change to the design of the forklift truck 10, so that an increase of cost for the change can be reduced. The outer configuration and arrangements described above refers to, for example, a drive mechanism such as a torque converter and a hydraulic mechanism for loading.
(4) The anti-freezing mechanism is formed by the recess 36 in the parking lever 29. Therefore, if the forklift truck does not have the detection mechanism, the anti-freezing mechanism of the present invention is applied only by replacing the parking lever 29 for installing the detection mechanism in the forklift truck. For example, even when the detection mechanism of the present invention is newly installed in a completed forklift truck, the anti-freezing mechanism may be applied merely by replacing the parking lever 29.
(5) Water attached to the limit switch 30 is allowed to be discharged by the recess 36 formed in the parking lever 29. Therefore, there is no need to improve the liquid-tightness of the switch cover 33 to an extent that substantially no water flows into the switch cover 33. It may be preferable that the liquid-tightness of the switch cover 33 is improved. However, such the improvement requires parts assembled into the switch cover 33 to be made with high accuracy and sealing performance, so that the cost of the switch cover 33 is increased, accordingly. Even if the liquid-tightness of the switch cover 33 may be improved thereby to prevent the water from flowing into the switch cover 33 completely, water by condensation may be attached to the limit switch 30. According to the first preferred embodiment of the present invention, however, any water flowed into the switch cover 33 or attached to the limit switch 30 by condensation may be drained through the recess 36.
(6) Since the recess 36 formed in the parking lever 29 permits water attached to the limit switch 30 to be discharged, there is no need to install a cover at the lower portion of the truck body 11 for preventing water from flowing into the switch cover 33. Therefore, production cost of the forklift truck 10 may be reduced.

The above embodiment may be modified in various ways as exemplified below.

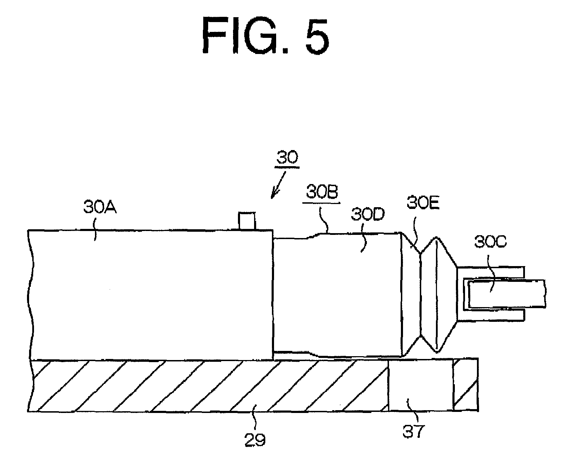

In the above preferred embodiment, the recess 36 is formed in the parking lever 29. Alternatively, a hole 37 may be formed through the parking lever 29 at a position opposed to the bellows 30E as a water drain passage, as shown in Fig. 5. More specifically, the hole 37 is located at a position directly under the bellows 30E.

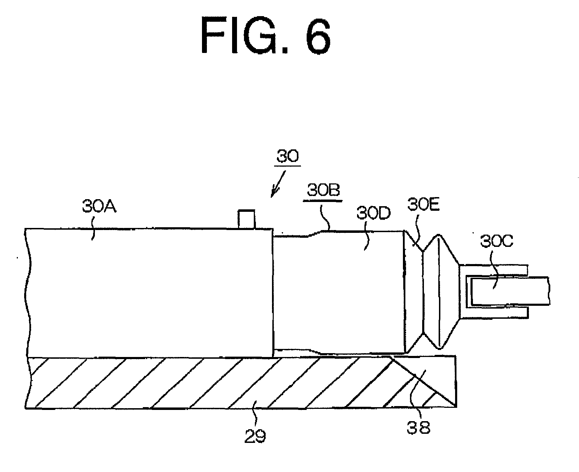

In the above preferred embodiment, the recess 36 may be substituted by a groove 38 formed in the parking lever 29 at a position opposed to the bellows 30E at a falling gradient toward the lateral or bottom surface of the parking lever 29, as shown in Fig. 6. More specifically, the groove 38 is located at a position directly under the bellows 30E.

In the above preferred embodiment, the built-in switch of the limit switch 30 may be operable to generate an OFF-signal in the released state of the parking brake and an ON-signal in the non-released state of the parking brake.

In the above preferred embodiment, the limit switch 30 is not limited to the roller plunger type, but it may be of a push plunger type having a boot seal.

In the above preferred embodiment, the warning may be given alternatively by a indicator such as light-emitting diode. If the forklift truck 10 has a display in the operator's compartment, the warning may be given on the display.

In the above preferred embodiment, the contact surface provided by the bolt 34 with which the roller 30C of the limit switch 30 is brought into contact may be substituted, for example, by a plate-like member provided in the bracket 35.

Therefore, the present examples and embodiments are to be considered as illustrative and not restrictive, and the invention is not to be limited to the details given herein but may be modified within the scope of the appended claims,

An anti-freezing mechanism for a limit switch in an industrial vehicle includes a parking brake device, a parking brake lever, a parking lever and a limit switch. The parking brake device is used for parking the industrial vehicle. The parking brake lever is operated by an operator. The parking lever is used for connecting the parking brake lever with the parking brake device. The parking lever includes a link mechanism for actuating the parking brake device in accordance with the operation of the parking brake lever. The limit switch is used for detecting operating state of a parking brake. The limit switch is provided on the top surface of the parking lever, A water drain passage is formed in the parking lever at a position corresponding to a sliding portion of the limit switch for draining water attached to the sliding portion below the parking lever.

## Claims

1. An anti-freezing mechanism for a limit switch (30) in an industrial vehicle (10) comprising:
a parking brake device (23) for parking the industrial vehicle (10);
a parking brake lever (22) operated by an operator;
a parking lever (29) for connecting the parking brake lever (22) with the parking brake device (23), the parking lever (29) including a link mechanism for actuating the parking brake device (23) in accordance with the operation of the parking brake lever (22); and
a limit switch (30) used for detecting operating state of a parking brake, the limit switch (30) being provided on the top surface of the parking lever (29),
**characterized in that** a water drain passage is formed in the parking lever (29) at a position corresponding to a sliding portion (30e) of the limit switch (30) for draining water attached to the sliding portion (30e) below the parking lever (29).

2. The anti-freezing mechanism for the limit switch (30) according to claim 1, **characterized in that** the water drain passage is formed at a position under the sliding portion (30e) of the limit switch (30).

3. The anti-freezing mechanism for the limit switch (30) according to claim 1, **characterized in that** the water drain passage is a cutout portion of the parking lever (29).

4. The anti-freezing mechanism for the limit switch (30) according to claim 2 or 3, **characterized in that** the cutout portion is a recess (36) formed in a lateral surface of the parking lever (29),

5. The anti-freezing mechanism for the limit switch (30) according to claim 1 or 2, **characterized in that** the water drain passage is a hole (37) formed in the parking lever (29).

6. The anti-freezing mechanism for the limit switch (30) according to claim 1 or 2, **characterized in that** the water drain passage is a groove (38) formed in the parking lever (29) at a falling gradient of the parking lever (29).

7. The anti-freezing mechanism for the limit switch (30) according to any one of claims 1 through 6, **characterized in that** the limit switch (30) is of a roller plunger type having a boot seal (30d).
